Europäisches Patentamt

European Patent Office

Office européen des brevets

(11) Veröffentlichungsnummer : **0 156 993**
**B1**

(12) EUROPÄISCHE PATENTSCHRIFT

(45) Veröffentlichungstag der Patentschrift :
12.11.86

(51) Int. Cl.⁴ : **F 16 D 43/20**, F 16 D   7/06

(21) Anmeldenummer : 84115862.9

(22) Anmeldetag : 19.12.84

(54) Überlastelement für Drehmomentbegrenzungskupplungen.

(30) Priorität : 27.01.84 DE 3402860

(43) Veröffentlichungstag der Anmeldung :
09.10.85 Patentblatt 85/41

(45) Bekanntmachung des Hinweises auf die Patenterteilung : 12.11.86 Patentblatt 86/46

(84) Benannte Vertragsstaaten :
AT BE CH DE FR GB IT LI LU NL SE

(56) Entgegenhaltungen :
GB-A- 1 483 331
US-A- 2 837 190
US-A- 4 311 224

(73) Patentinhaber : Christian Mayr GmbH & Co. KG
Eichenstrasse 1
D-8951 Mauerstetten (DE)

(72) Erfinder : Mayer, Fritz, Dipl.-Ing.
Blütenring 89
D-8951 Mauerstetten (DE)
Erfinder : Dasser, Manfred, Dipl.-Ing.
Edelsbergstrasse 8
D-8964 Nesselwang (DE)

(74) Vertreter : Ruschke, Hans Edvard et al
Patentanwälte Dipl.-Ing. Olaf Ruschke Dipl.-Ing. Hans
E. Ruschke Dipl.-Ing. Jürgen Rost Dipl.-Chem. Dr. U.
Rotter Pienzenauerstrasse 2
D-8000 München 80 (DE)

## Beschreibung

Die vorliegende Erfindung betrifft ein Überlastelement nach dem Oberbegriff des Anspruches 1. Derartige Überlastelemente sind aus der DE-A-24 53 500 (& GB-A-14 83 331) bekannt. Sie beruhen auf dem Prinzip, daß eine durch Federdruck in Stellung gehaltene Kugel zwischen zwei Bauteilen angeordnet ist und das Drehmoment von dem einen zum anderen Bauteil überträgt. Sobald das Drehmoment den durch die Federkraft eingestellten Wert übersteigt, tritt die Kugel aus ihrem Sitz in dem einen Bauteil aus und verschiebt sich entgegen der Federkraft in das andere Bauteil, wo es dann bis zum Wiedereinrasten des Überlastelementes (z. B. von Hand) ohne Federdruckbeaufschlagung verbleibt. Die bei Auftreten der Überlast ausrastende Federbeaufschlagung der das Drehmoment übertragenden Kugel erfolgt über eine Reihe von Kugeln, die auf dem Umfang eines Druckbolzens verteilt über eine daran schräg angeordnete Schulter die Federkraft auf den Bolzen und somit auf die zur Übertragung des Drehmoments vorgesehene Kugel weiterleiten.

Derartige Überlastelemente mit einer Reihe von Kugeln zum Angriff an der genannten schrägen Schulter sind in Bezug auf das zu übertragende Drehmoment relativ begrenzt, weil die Kraftübertragung von diesen Kugeln zu der schrägen Schulter punktförmig geschieht und somit schon bei verhältnismäßig niedrigen Druckkräften die zulässige Hertzsche Flächenpressung überschritten wird, so daß sich bleibende Verformungen an der schrägen Schulter und/oder den Wälzkörpern einstellen.

Es ist demnach die der vorliegenden Erfindung zugrundeliegende Aufgabe, das bekannte Überlastelement in der Weise weiterzuentwickeln, und daß bei gleichen äußeren Abmessungen eine größere Ausrastkraft bzw. höhere Drehmomentgrenzen eingestellt werden können. Diese Aufgabe wird in überraschend einfacher Weise durch die Merkmale des Hauptanspruchs gelöst. Indem an Stelle der früher eingesetzten Kugelreihe nunmehr ein Segmentring eingesetzt wird, welcher den Querschnitt eines Polygons hat, dessen druckübertragende Seiten plan zu den entsprechenden Flächen des Überlastelementes verlaufen, wird die zur Druckübertragung zur Verfügung stehende Fläche wesentlich vergrößert, da von einer Punktberührung zu einer Flächen- oder Linienberührung übergegangen wird. Beim Ausrasten des Überlastelementes wandern die einzelnen Segmente dieses Ringes an der schrägen Schulter des Druckstiftes nach außen zu der einen größeren Durchmesser aufweisenden koaxialen Umfangsfläche des Druckbolzens und verbleiben dort bis zum Wiedereinrasten des Überlastelementes. In dieser Lage sind die einzelnen Segmente des Ringes auf einem etwas größeren Durchmesser, als zuvor angeordnet. d. h. ihr Abstand voneinander in Umfangsrichtung vergrößert sich dabei geringfügig, was aber für die Funktion des Überlastelementes unerheblich ist. Beim Wiedereinrasten wandern die einzelnen Segmente des Ringes mit polygonalem Querschnitt längs der schrägen Schulter des Druckbolzens zum kleineren Durchmesser desselben zurück und legen sich dort an die Umfangsfläche bzw. die schräge Schulter des Druckbolzens an. In dieser Position liegen die einzelnen Segmente des Ringes in Umfangsrichtung im wesentlichen aneinander an, um so einen praktisch durchgehenden Ring auszubilden, der an der schrägen Umfangschulter des Druckbolzens kontinuierlich anliegt.

In besonders vorteilhafter Weise ist die schräge Umfangsschulter an dem Druckbolzen in der Nähe des der Kugel zugewandten Endes des Druckbolzens vorgesehen mit der Folge, daß die Steuersegmente auf der von der Kugel abgewandten Seite von auf die Druckscheibe in axialer Richtung einwirkenden Tellerfedern beaufschlagt sind, die sich an einer auf dem kleineren Durchmesser des Druckbolzens angeordneten Nachstellmutter abstützen, die in dem nach außen vorstehenden Ende des Überlastelementes in das Gehäuse eingeschraubt ist. Hierdurch kann die Federvorspannung der Tellerfedern besonders einfach von außen zugänglich geändert werden, während bei dem Überlastelement gemäß der einleitend erwähnten DE-A-24 53 500 zwei separate Einstellvorgänge vorgenommen werden müssen, die noch dazu in einem exakten Verhältnis zueinander stehen müssen.

Die Einführung von den erfindungsgemäßen Segmentringen anstelle der bisher benutzten Kugelreihen ermöglicht eine kompaktere Bauweise des Überlastelementes als bisher bei gleichem abzusicherndem Drehmoment. Obwohl der zum Einbau des Überlastelementes in die eine Kupplungshälfte zur Verfügung stehende Raum beschränkt ist, gelingt es mit einer solchen kompakteren Anordnung besser als bisher, die schräge Umfangsschulter in die Nähe der drehmomentübertragenden Kugel zu verlegen und somit die einfachere Verstellbarkeit des Überlastelementes vorzusehen.

Im Nachfolgenden wird ein Ausführungsbeispiel der Erfindung unter Bezugnahme auf die beigefügten Zeichnungen beschrieben.

Figur 1 zeigt das Überlastelement in einer typischen Einbausituation, während

Figur 2 das Überlastelement in einer etwas vergrößerten Darstellung zeigt.

Das Überlastelement weist ein zentrales Teil in Form eines zwei verschiedene Durchmesser aufweisenden Druckbolzens 1 auf, wobei der Übergang zwischen den beiden unterschiedlichen Durchmessern in Form einer schrägen Umfangsschulter ausgebildet ist. In das eine zentrale Ausnehmung aufweisende, einen größeren Durchmesser aufweisende Ende des Druckbolzens ist eine Kugel 3 derart eingepreßt, daß sie in alle Richtungen frei drehbar ist. Auf dem kleineren Durchmesser ist in der in den Zeichnungen dargestellten, nicht ausgerasteten Stellung des Überlastelementes ein aus mehreren Segmenten bestehender Ring 4 angeordnet, der einen polygonalen Querschnitt aufweist und mit einer Seitenfläche an der schrägen Umfangsschulter 20 anliegt. Mit seiner inneren Umfangsfläche liegt er am kleineren Durchmesser des Druckbolzens an. In der gezeichneten Stellung liegen die Segmente des Ringes 4 außerdem an einer schräg zur Rotationsachse verlaufenden Stirnfläche einer Stützbuchse 8 an, welche im Gehäuse 11 des Überlastelementes angeordnet ist. Auf der entgegengesetzten Seite der Segmente liegt eine Druckscheibe 5 an, deren den Segmenten zugewandte Stirnfläche ebenfalls schräg zur Rotationsachse verläuft. Die Druckscheibe 5 wird in axialer Richtung von Tellerfedern 6 beaufschlagt, welche um den kleineren Durchmesser des Druckbolzens herum angeordnet sind und sich an einer in das Gehäuse 11 eingeschraubten Nachstellmutter 7 abstützen, durch die die Federvorspannung einstellbar ist. Der an der schrägen Schulter 20 anliegende Ring 4 ist in Umfangsrichtung in mehrere Segmente unterteilt, damit die einzelnen Segmente beim Ausrasten des Überlastelementes, nämlich wenn der Druckbolzen 1 sich gegenüber der gezeichneten Stellung nach rechts verschiebt, die einzelnen Segmente an der schrägen Schulter 20 zum größeren Durchmesser des Steuerbolzens 1 wandern können.

In einem konkreten Anwendungsfall dieser Überlastelemente werden mindestens zwei (gegenüberliegende) Überlastelemente in zwei konzentrisch zueinander gelagerte Kupplungsflansche A und B eingebaut. Die Drehmomentübertragung erfolgt im eingerasteten Zustand formschlüssig zwischen dem Druckbolzen 1 über die Kugel 3 und das entsprechend ausgestaltete Druckstück 2 in der anderen Kupplungshälfte (Kupplungsflansch B). Bei Überlast verdrehen sich die beiden Flansche A und B gegeneinander und die Kugel 3 mit dem Druckbolzen 1 weicht in der Zeichnung nach rechts aus. Die Segmente des Ringes 4 wandern dabei über die schräge Umfangsschulter 20 des Druckbolzens 1 radial nach außen und halten den Bolzen 1 und damit die Kugel 3 in der ausgerasteten Stellung. Die formschlüssige Verbindung der beiden Kupplungsflansche A und B ist damit aufgehoben.

Zum Erreichen der ausgerasteten Stellung sind die Steuersegmente 4 also an der erwähnten schrägen Schulter 20 radial nach außen gewandert und liegen dann mit der radial einwärts gerichteten Umfangsfläche am größeren Durchmesser 1a des Druckbolzens 1 an, d. h. die von den Tellerfedern 6 in axialer Richtung ausgeübte Druckkraft kann sich nicht mehr auf den Druckbolzen auswirken. Der Kraftfluß geht von den Tellerfedern zur Druckscheibe 5 und zu den Segmenten sowie über die Stützbuchse 8 zum Gehäuse 11, in welches die Nachstellmutter 7 der Tellerfedern eingeschraubt ist.

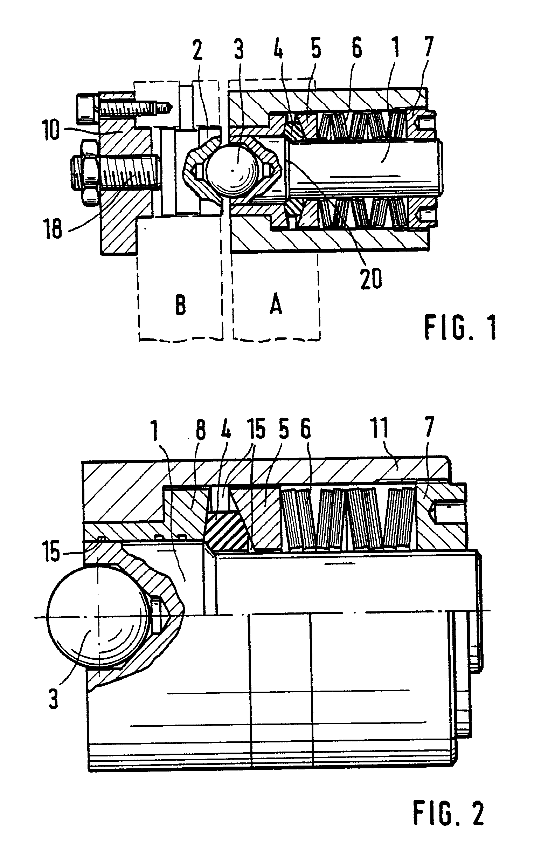

Das Wiedereinrasten der Kupplung geschieht in einfacher Weise dadurch, daß die beiden Flansche A und B in die richtige Winkelstellung zueinander gedreht werden, bis der Druckbolzen 1 und das Druckstück 2 genau fluchten (erkennbar durch Markierungen am Außenumfang der Flansche A und B). Indem gegen das (in der Figur) rechte Ende des Druckbolzens 1 geschlagen oder gedrückt wird, kann der Bolzen 1 wieder in seine eingerastete Stellung gebracht werden. Dies bedeutet, daß die Segmente wieder radial einwärts an der schrägen Umfangsschulter 20 bis zum kleineren Durchmesser des Druckbolzens 1 zurückwandern und ihre in der Zeichnung dargestellten Position einnehmen. Die Kupplung ist somit betriebsbereit, da alle Elemente der Kupplung wieder im Eingriff sind. Die einem axialen Ausweichen der Kugel 3 von den Tellerfedern in Axialrichtung entgegengesetzte Kraft wird hierbei von der Druckscheibe 5 auf dem Segmentring 4 und von dort auf die schräge Schulter übertragen, die ihrerseits die Kugel 3 beaufschlagt. Wie ersichtlich kann das von der Kugel 3 zu übertragende Grenzdrehmoment durch Einstellen der Nachstellmutter 7 variiert werden. Die Auswärtsbewegung des Druckbolzens 1 (in den Figuren nach links) wird im nicht eingebauten Zustand (Fig. 2) dadurch begrenzt, daß die Segmente sich axial an der Stützbuchse 8 abstützen. Durch eine Druckschraube 18 in einer Gegenplatte 10 im Kupplungsflansch B läßt sich das Druckstück 2 spielfrei gegen die Kugel einstellen.

Die Segmente bilden in der in der Zeichnung gezeigten eingerasteten Stellung einen im wesentlichen durchgehenden Ring, wobei jedoch z. B. radiale Trennebenen vorgesehen sind, damit seine Teile beim Ausrasten des Überlastelementes auf den etwas größeren Durchmesser des Druckbolzens wandern können. Die Trennebenen liegen vorzugsweise in verschiedenen Radialebenen der Rotationsachse des Ringes 4. Die nach innen und außen gewandten Umfangsflächen des Ringes 4 verlaufen konzentrisch zur Rotationsachse, während die an der schrägen Schulter 20 des Druckbolzens 1 anliegende Fläche die gleiche Neigung zur Symmetrieachse hat wie die genannte schräge Schulter. Die an der Druckscheibe 5 bzw. an der Stützbuchse 8 anliegenden Flächen des Ringes 4 bzw. der einzelnen Segmente haben ebenfalls die gleiche Winkelausrichtung zur Symmetrieachse des Überlastelementes wie die wirksamen Flächen der Druckscheibe bzw. der Stützbuchse. Im dargestellten Beispiel verläuft die an der Druckscheibe 5 anliegende Fläche der Segmente etwa in einem Winkel von 65° zur Rotationsachse, wobei die an der Stützbuchse 8 anliegende Fläche der Segmente einen Winkel von 110° zur Rotationsachse des Überlastelementes einnimmt. Die schräge Schulter 20 verläuft unter etwa 45° zur Rotationsachse.

Es ist grundsätzlich gleichgültig, in wie viele Steuer-Segmente der Ring 4 unterteilt ist, doch liegt es auf der Hand, daß die Druckverhältnisse um so günstiger werden, je mehr einzelne Segmente vorgesehen sind. In einem praktischen Ausführungsbeispiel ist der Ring 4 in sechs identische Segmente aufgeteilt.

Zur dauerhaften Schmierung des Überlastelementes sind die mit 15 angedeuteten Bereiche mit Fett versehen.

## Patentansprüche

1. Überlastelement zur Begrenzung eines zwischen zwei Kupplungshälften (A, B) zu übertragenden Drehmomentes, welches durch eine in einem ersten Kupplungsflansch federnd gelagerte Kugel (3) auf einen Kugelsitz (2) in einem zweiten Kupplungsflansch übertragbar ist, mit einem die Kugel (3) in der drehmomentübertragenden Stellung haltenden Druckbolzen (1), welcher einen größeren und einen kleineren Durchmesser und eine diese verbindende schräge Umfangsschulter (20) aufweist, an welcher auf dem Umfang des Druckbolzens verteilt mehrere Druckübertragungskörper (4) angeordnet sind, die von einer Federanordnung (6) axial in Richtung auf die Umfangsschulter beaufschlagt im eingerasteten Zustand des Überlastelementes an dem kleineren Durchmesser und an der schrägen Schulter anliegen, mit einer auf dem größeren Durchmesser des Druckbolzens angeordneten Stützbuchse (8), deren an den Druckübertragungskörpern anliegende axiale Stirnfläche zu diesen hin geneigt ist, sowie mit einer auf dem kleineren Durchmesser des Druckbolzens angeordneten federdruckbeaufschlagten Druckscheibe (5), deren an den Druckübertragungskörpern anliegende axiale Stirnfläche ebenfalls zu diesen hin geneigt ist, dadurch gekennzeichnet, daß die Druckübertragungskörper (4) die Form eines in Umfangsrichtung mehrfach unterteilten Ringes mit polygonalem Querschnitt haben, dessen druckaufnehmende Seitenflächen plan zu den anliegenden Flächen der Umfangsschulter (20), der Stützbuchse (8) und der Druckscheibe (5) verlaufen.

2. Überlastelement nach Anspruch 1, dadurch gekennzeichnet, daß der Ring (4) in Richtung von Radialebenen durch die Rotationsachse des Ringes in einzelne Segmente unterteilt ist.

3. Überlastelement nach Anspruch 1 oder 2, dadurch gekennzeichnet, daß der Ring (4) in mindestens sechs Segmente unterteilt ist.

4. Überlastelement nach einem der voranstehenden Ansprüche, dadurch gekennzeichnet, daß die Segmente des Ringes (4) auf der der Schulter (20) abgewandten Seite von auf die Druckscheibe (5) in axialer Richtung einwirkenden Tellerfedern (6) beaufschlagt sind, welche sich an einer auf dem kleineren Durchmesser des Druckbolzens (1) angeordneten Nachstellmutter (7) abstützen, die an dem von der Kugel (3) abgewandten axialen Ende des Überlastelementes in das Gehäuse (11) von außen zugänglich eingeschraubt ist, wobei die Schulter (20) in der Nähe des der Kugel (3) zugewandten Ende des Druckbolzens (1) an diesem vorgesehen ist.

## Claims

1. Overload element for limiting the torque transmitted between two sections (A. B) of a coupling, said torque to be transmitted by a ball (3) resiliently mounted in a first coupling flange to a ball seat (2) provided in a second coupling flange, comprising a plunger (1) to hold ball (3) in its torque transmitting position, said plunger having a major diameter portion and a minor diameter portion as well as an inclined peripheral shoulder (20) connecting said portions, said shoulder having disposed thereover a plurality of force transmitting bodies (4) distributed along the plunger periphery and axially biased by spring means (6) towards said peripheral shoulder to engage the minor diameter portion and the inclined shoulder in the engaged condition of the overload element, a supporting bushing (8) disposed on the major diameter portion of the plunger and having an axial end face engaging and inclined towards the pressure transmitting bodies, and a spring biased pressure ring (5) disposed over the minor diameter portion of the plunger and having an axial end face engaging and inclined towards the pressure transmitting bodes, characterized in that pressure transmitting bodies (4) are in the form of a ring member having a polygonal cross section and divided multiply in the circumferential direction thereof, with the pressure receiving side surfaces of said ring member being parallel with the adjacent surfaces engaging it of peripheral shoulder (20), supporting bushing (8) and pressure ring (5).

2. Overload element as in claim 1, characterized by ring member (4) being divided into segments in the direction of radial planes extending through the axis of rotation of said ring member.

3. Overload element as in claim 1 or 2, characterized by ring member (4) being divided into at least six segments.

4. Overload element as in any one of the preceding claims, characterized in that the segments of ring member (4) are loaded on the side thereof facing away from shoulder (20) by belleville washers (6) acting axially on pressure ring (5) and abutting an adjustment nut (7) disposed over the minor diameter portion of plunger (1) and threaded into housing (11) at the axial end remote from ball (3) of the overload element to be externally accessible, with shoulder (20) being provided on plunger (1) near the end thereof adjacent ball (3).

## Revendications

1. Elément à limitation de surcharge pour limiter un couple qu'il faut transmettre entre deux moitiés d'accouplement (A, B) et qui peut être transmis, par une bille (3) portée élastiquement dans un premier flasque de l'accouplement, à un siège de billes (2) prévu dans un second flasque de l'accouplement, comportant un boulon de pression (1) qui maintient la bille (3) dans la position de transmission du couple et qui présente un diamètre plus grand et un diamètre plus petit et un épaulement périphérique oblique (20) qui les relie et contre lequel sont disposées plusieurs pièces de transmission de pression (4) qui sont réparties à la périphérie du boulon de pression et qui, à l'état cranté de l'élément à limitation de surcharge, sollicitées axialement dans la direction de l'épaulement périphérique par un dispositif formant ressort (6), s'appuient contre le diamètre plus petit et contre l'épaulement oblique ; comportant aussi un manchon d'appui (8) qui est disposé sur le diamètre plus grand du boulon de pression et dont la surface frontale axiale, appuyée contre les pièces de transmission de pression, est inclinée vers ces pièces ; et comportant aussi une rondelle de pression (5) qui est sollicitée par la pression du ressort, qui est disposée sur le diamètre plus petit du boulon de pression et dont la surface frontale axiale, qui s'appuie contre les pièces de transmission de pression, est également inclinée vers ces pièces, caractérisé en ce que les pièces de transmission de pression (4) ont la forme d'une bague de section polygonale, divisée en plusieurs pièces dans la direction périphérique, dont les surfaces latérales, qui reprennent la pression, sont dans le même plan que les surfaces d'appui de l'épaulement périphérique (20). du manchon d'appui (8) et de la rondelle de pression (5).

2. Elément à limitation de surcharge selon la revendication 1. caractérisé en ce que la bague (4) est divisée en différents segments selon la direction des plans radiaux passant par l'axe de rotation de la bague.

3. Elément à limitation de surcharge selon la revendication 1 ou 2. caractérisé en ce que la bague 4 est divisée en au moins six segments.

4. Elément à limitation de surcharge selon l'une des revendications précédentes, caractérisé en ce que les segments de la bague (4) sont sollicités, du côté opposé de l'épaulement (20). par des rondelles Belleville (6) qui agissent sur la rondelle de pression (5) en direction axiale, qui s'appuient contre un écrou de reprise de réglage (7) qui est disposé sur le diamètre plus petit du boulon de pression (1) et qui, depuis l'extérieur, se visse dans le carter (11) à l'extrémité axiale, côté opposé de la bille (3). de l'élément à limitation de surcharge, étant précisé que l'épaulement (20) est prévu sur le boulon de pression (1) au voisinage de l'extrémité de ce boulon côté bille (3).

FIG. 1

FIG. 2